# EUROPÄISCHE PATENTSCHRIFT

(11) **EP 4 445 110 B1**
(45) Veröffentlichungstag und Bekanntmachung des Hinweises auf die Patenterteilung: **19.08.2026**
(21) Anmeldenummer: 22818456.0
(22) Anmeldetag: 06.12.2022
(51) Int. Cl.: G01M 3/20

(54) **VAKUUMLECKDETEKTOR MIT MEHRSTUFIGER VAKUUMPUMPE UND INTEGRIERTEM GASSPEZIFISCHEM GASSENSOR SOWIE VERFAHREN ZUM HERSTELLEN EINES VAKUUMLECKDETEKTORS**
VACUUM LEAK DETECTOR WITH MULTISTAGE VACUUM PUMP AND INTEGRATED GAS-SPECIFIC GAS SENSOR, AND METHOD FOR PRODUCING A VACUUM LEAK DETECTOR
DÉTECTEUR DE FUITE À VIDE AVEC POMPE À VIDE À ÉTAGES MULTIPLES ET CAPTEUR DE GAZ INTÉGRÉ SPÉCIFIQUE AU GAZ, ET PROCÉDÉ DE FABRICATION D'UN DÉTECTEUR DE FUITE À VIDE

(30) Priorität: 08.12.2021 DE 102021132252
(43) Veröffentlichungstag der Anmeldung: 16.10.2024
(73) Patentinhaber: Inficon GmbH, 50968 Köln (DE)
(72) Erfinder: STRIETZEL, Carsten, 50968 Köln (DE); BOKANOVIC, Ivan, 50968 Köln (DE); BRUHNS, Hjalmar, 50968 Köln (DE)
(74) Vertreter: dompatent
(86) Internationale Anmeldenummer: PCT/EP2022/084572
(87) Internationale Veröffentlichungsnummer: WO 2023/104781

(56) Entgegenhaltungen:
- DE-A1- 10 055 057
- US-A- 4 984 450
- US-B2- 11 009 422

## Beschreibung

Die Erfindung betrifft einen gasspezifischen Vakuumleckdetektor mit einer mehrstufigen Vakuumpumpe und einem gasspezifischen Sensor.

Bei herkömmlichen Vakuumleckdetektoren ist eine Prüfkammer mit einer Vakuumpumpe verbunden, um Gas aus der Prüfkammer abzusaugen. In der Prüfkammer befindet sich ein Prüfling oder die Kammer selbst ist der Prüfling. Wenn der Prüfling ein Leck aufweist, tritt Gas aus dem Prüfling in die Prüfkammer aus und wird einem mit der Prüfkammer verbundenen Gassensor zugeführt. Bei dem Gassensor handelt es sich herkömmlicherweise um ein von der Vakuumpumpe separates Gerät, beispielsweise in Form eines Totaldruckmessgeräts oder in Form eines gasartabhängigen, das heißt gasspezifischen Sensors wie z.B. eines Massenspektrometers, eines optischen Sensors, einerIR-Absorptionseinheit oder eines Metalloxyd-Sensors.

Bei Leckdetektionssystemen mit mehrstufigen Vakuumpumpen ist es bekannt, einen separaten Gasdetektor an einen Anschluss der Vakuumpumpe anzuschließen, beispielsweise an den Gaseinlass oder an einen Zwischengaseinlass zwischen zwei benachbarten Pumpstufen.

Aus der Druckschrift US 4 984 450 A ist ein Verfahren zur Dichtheitsprüfung eines Bauteils, insbesondere eines Prüfbehälters, demgemäß ein Prüfgas auf eine Seite des Bauteils geleitet wird und der Raum auf der anderen Seite evakuiert und an einen Prüfgasdetektor angeschlossen wird.

US 11 009 422 B2 offenbart eine Vakuumglockensonde zur Verwendung in Kombination mit einem Gasleckdetektor zum Aufspüren von Lecks in unterirdischen Gasleitungen. Die Vakuumglockensonde umfasst einen flexiblen Saugnapf mit einer Unterseite, die eine Saugöffnung bildet, wobei der Saugnapf ein Innenvolumen definiert und einen Balg bildet, der durch Vakuumdruck innerhalb des Innenvolumens komprimierbar ist, wobei die Unterseite einen weichen Dichtungsring mit einer höheren Elastizität als der Saugnapf umfasst, der die Saugöffnung umgibt und eine Kontaktfläche bildet, die geeignet ist, eine Dichtung in Kontakt mit einer Bodenfläche zu erzeugen, unter der ein Gasleck angenommen wird, so dass ein Vakuum innerhalb des Innenvolumens bei Kontakt mit der Bodenfläche erzeugt wird, wobei der weiche Dichtungsring flach und zylindrisch ist und an der Unterseite des Saugnapfs befestigt ist.

Der Erfindung liegt die Aufgabe zugrunde, einen verbesserten, kostengünstigeren und technisch vereinfachten gasspezifischen Vakuumleckdetektor sowie ein entsprechendes Verfahren zur Herstellung eines gasspezifischen Vakuumleckdetektors bereitzustellen.

Erfindungsgemäß ist der gasspezifische, das heißt gasspezifischer Gassensor, der selektiv und ggf. einstellbar auf eine spezielle Gasart anspricht, integraler Bestandteil der Vakuumpumpe und dadurch zur Detektion eines spezifischen Gases innerhalb der Vakuumpumpe ausgebildet. Der Gassensor detektiert also nicht ein Gas innerhalb der Prüfkammer oder innerhalb eines mit der Vakuumpumpe oder einer Pumpstufe der Vakuumpumpe verbundenen Leitungsweges, sondern direkt innerhalb der Vakuumpumpe.

Entsprechend dem erfindungsgemäßen Verfahren zur Herstellung eines gasspezifischen Vakuumleckdetektors wird ein gasspezifischer Gassensor derart in eine mehrstufige Vakuumpumpe integriert, dass der gasspezifische Gassensor integraler Bestandteil der Vakuumpumpe ist und dadurch zur Detektion eines spezifischen Gases innerhalb der Vakuumpumpe ausgebildet ist.

Vorteilhafter Weise sind die mehreren Pumpstufen der Vakuumpumpe von einem gemeinsamen Gehäuse umgeben, in dem auch der Gassensor angeordnet ist. Das Gehäuse der Vakuumpumpe ist von dem Gehäuse der Prüfkammer und/oder von dem Gehäuse eines möglichen separaten Gasdetektors verschieden.

Die Vakuumpumpe kann einen Anschluss für eine Prüfkammer oder für einen Prüfling aufweisen. Der Anschluss ist dabei vorzugsweise an dem Gehäuse vorgesehen.

Alternativ oder ergänzend kann das Gehäuse der Vakuumpumpe einen weiteren Anschluss für einen separaten Gasdetektor aufweisen.

In Förderrichtung der Vakuumpumpe ist stromaufwärts mindestens einer der Pumpstufen ein mit dem Gassensor verbundener Abzweig vorgesehen. Der Abzweig ist mit einem selektiv betätigbaren Sperrventil versehen. Das Ventil ist mit einer Ventilsteuerung versehen, die dazu ausgebildet ist, das Ventil in Abhängigkeit von der Drehzahl oder der Leistungsaufnahme der Vakuumpumpe oder mindestens einer Pumpstufe der Vakuumpumpe zu betätigen. Bei dem Sensor kann es sich um einen Membransensor, einen Halbleiter- oder Metalloxyd-Sensor, ein Massenspektrometer, einen CO₂-Sensor, einen Infrarot-Absorptionssensor oder um einen gasspezifischen emissionsspektroskopischen Sensor. Der jeweilige Sensor sollte vorzugsweise mindestens ein typischerweise zur Leckagesuche eingesetztes Prüfgas wie z.B. Wasserstoff, Helium, CO2 und/oder Kohlenwasserstoff mit ausreichender Empfindlichkeit nachweisen können.

Bei der Vakuumpumpe kann es sich um eine mehrstufige Scrollpumpe, eine Drehschieberpumpe, eine Wälzkolbenpumpe oder um Schraubenstufen-Pumpe handeln.

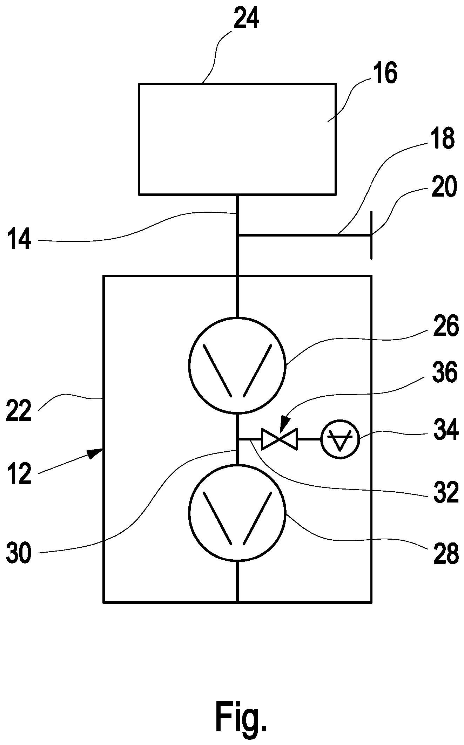

Im Folgenden wird anhand der Figur ein Ausführungsbeispiel der Erfindung näher erläutert. Die Figur zeigt das Ausführungsbeispiel in schematischer Darstellung.

Eine mehrstufige Vakuumpumpe 12 ist über eine Verbindungsleitung 14 mit einer Prüfkammer 16 verbunden, um die Prüfkammer 16 zu evakuieren. Dabei enthält die Prüfkammer 16 entweder ein auf Dichtheit zu prüfendes Objekt oder ist selbst das auf Dichtheit zu überprüfende Objekt. Die Verbindungsleitung 14 ist mit einem separat absperrbaren Abzweig 18 mit einem Anschluss 20 versehen, an den ein Gasdetektor anschließbar ist.

Die Vakuumpumpe 12 weist ein Gehäuse 22 auf, dass von dem Gehäuse 24 der Prüfkammer 16 und von dem Gehäuse eines möglichen, separaten Gasdetektors, der beispielsweise an den Anschluss 20 angeschlossen sein kann, verschieden ist. Die Vakuumpumpe 12 ist eine mehrstufige Vakuumpumpe mit zwei Pumpstufen 26, 28, die jeweils ebenfalls innerhalb des gemeinsamen Gehäuses 22 angeordnet sind. Die beiden Pumpstufen 26, 28 sind durch einen Kanal 30 verbunden, der einen Abzweig 32 aufweist, an den ein gasspezifischer Gassensor 34 angeschlossen ist. Der Abzweig 32 ist mit einem über eine in der Figur nicht dargestellte Ventilsteuerung separat sperrbaren Sperrventil 36 versehen. Das Ventil 36 ist zwischen den beiden Pumpstufen 26, 28 und dem Gassensor 34 angeordnet, um den Gassensor 34 gastechnisch von den beiden Pumpstufen 26, 28 zu trennen.

Bei dem Gassensor 34 handelt es sich um einen Membransensor (z.B. WISE Technology Sensor). Das Sperrventil 36 ist in einem Grundzustand gesperrt und öffnet bei Überschreiten einer vorgegebenen Drehzahl oder Leistungsaufnahme der beiden Pumpstufen 26, 28 automatisch. Der Sensor 34, das Sperrventil 36, der Abzweig 32 und die beiden Pumpstufen 26, 28 sind jeweils integrale Bestandteile der Vakuumpumpe 12 und somit innerhalb des gemeinsamen, diese Komponenten umgebenden Gehäuses 22 angeordnet.

## Patentansprüche

1. Gasspezifischer Vakuum-Leckdetektor mit einer mehrstufigen Vakuumpumpe (12) und einem gasspezifischen Gassensor (34),
wobei der Gassensor (34) integraler Bestandteil der Vakuumpumpe (12) ist und dadurch zur Detektion eines spezifischen Gases innerhalb der Vakuumpumpe (12) ausgebildet ist, wobei in Förderrichtung der Vakuumpumpe (12) stromaufwärts mindestens einer der Pumpstufen ein mit dem Gassensor (34) verbundener Abzweig (32) vorgesehen ist, wobei der Abzweig (32) mit einem selektiv betätigbaren Sperrventil (36) versehen ist, **dadurch gekennzeichnet, dass** das Ventil mit einer Ventilsteuerung versehen ist, die dazu ausgebildet ist, das Ventil in Abhängigkeit von der Drehzahl oder der Leistungsaufnahme der Vakuumpumpe oder mindestens einer Pumpstufe der Vakuumpumpe zu betätigen.

2. Vakuum-Leckdetektor nach Anspruch 1, **dadurch gekennzeichnet, dass** die mehreren Pumpstufen (26,28) der Vakuumpumpe (12) von einem gemeinsamen Gehäuse (22) umgeben sind, in dem auch der Gassensor (34) angeordnet ist.

3. Vakuum-Leckdetektor nach Anspruch 1 oder 2, **dadurch gekennzeichnet, dass** die Vakuumpumpe (12) einen Anschluss (20) für eine Prüfkammer (16) oder einen Prüfling aufweist.

4. Vakuum-Leckdetektor nach einem der vorhergehenden Ansprüche, **dadurch gekennzeichnet, dass** der Sensor ein Membransensor, ein Halbleiter- oder Metalloxyd-Sensor, ein Massenspektrometer, ein CO₂-Sensor, ein Infrarot-Absorptionssensor oder ein emissionsspektroskopischer Sensor ist.

5. Vakuum-Leckdetektor nach einem der vorhergehenden Ansprüche, **dadurch gekennzeichnet, dass** die Vakuumpumpe eine mehrstufige Scrollpumpe, eine Drehschieberpumpe, eine Wälzkolbenpumpe, eine Schraubenstufen-Pumpe oder eine Turbomolekularpumpe ist.

6. Verfahren zum Herstellen eines gasspezifischen Vakuum-Leckdetektors nach einem der vorhergehenden Ansprüche,
wobei der gasspezifischer Gassensor (34) derart in die mehrstufige Vakuumpumpe (12) integriert wird, dass der Gassensor (34) integraler Bestandteil der Vakuumpumpe (12) ist und dadurch zur Detektion eines spezifischen Gases innerhalb der Vakuumpumpe (12) ausgebildet ist.

## Claims

1. A gas-specific vacuum leak detector with a multistage vacuum pump (12) and a gas-specific gas sensor (34),
wherein
the gas sensor (34) is an integral part of the vacuum pump (12) and is thereby configured to detect a specific gas within the vacuum pump (12), wherein, in the direction of flow of the vacuum pump (12), upstream of at least one of the pump stages, a branch (32) connected to the gas sensor (34) is provided, wherein the branch (32) is provided with a selectively operable stop valve (36),
**characterized in that**
the valve is provided with a valve controller which is configured to actuate the valve as a function of the speed or the power consumption of the vacuum pump or at least one pump stage of the vacuum pump.

2. The vacuum leak detector according to claim 1, **characterized in that** the plurality of pump stages (26,28) of the vacuum pump (12) is surrounded by a common housing (22) in which also the gas sensor (34) is arranged.

3. The vacuum leak detector according to claim 1 or 2, **characterized in that** the vacuum pump (12) has a port (20) for a test chamber (16) or a test object.

4. The vacuum leak detector according to any one of the preceding claims, **characterized in that** the sensor is a membrane sensor, a semiconductor sensor or metal oxide sensor, a mass spectrometer, a CO₂ sensor, an infrared absorption sensor or an emission-spectroscopic sensor.

5. The vacuum leak detector according to any one of the preceding claims, **characterized in that** the vacuum pump is a multistage scroll pump, a rotary vane pump, a roots pump, a screw stage pump or a turbomolecular pump.

6. A method for producing a gas-specific vacuum leak detector according to one of the preceding claims,
wherein
the gas-specific gas sensor (34) is integrated into a multistage vacuum pump (12) such that the gas sensor (34) is an integral part of the vacuum pump (12) and is thereby adapted to detect a specific gas within the vacuum pump (12).

## Revendications

1. Détecteur de fuite à vide spécifique au gaz avec une pompe à vide à étages multiples (12) et un capteur de gaz spécifique au gaz (34),
dans lequel le capteur de gaz (34) fait partie intégrante de la pompe à vide (12) et est ainsi réalisé pour détecter un gaz spécifique à l'intérieur de la pompe à vide (12), dans lequel une dérivation (32) reliée au capteur de gaz (34) est prévue en amont d'au moins un des étages de pompe dans la direction de refoulement de la pompe à vide (12), dans lequel la dérivation (32) est pourvue d'une vanne d'arrêt (36) à actionnement sélectif, **caractérisé en ce que** la vanne est pourvue d'une commande de vanne, qui est réalisée pour actionner la vanne en fonction de la vitesse de rotation ou de la puissance absorbée de la pompe à vide ou d'au moins un étage de pompe de la pompe à vide.

2. Détecteur de fuite à vide selon la revendication 1, **caractérisé en ce que** les plusieurs étages de pompe (26, 28) de la pompe à vide (12) sont entourés d'un boîtier commun (22), dans lequel est également disposé le capteur de gaz (34).

3. Détecteur de fuite à vide selon la revendication 1 ou 2, **caractérisé en ce que** la pompe à vide (12) présente un raccord (20) pour une chambre d'essai (16) ou un échantillon.

4. Détecteur de fuite à vide selon l'une quelconque des revendications précédentes, **caractérisé en ce que** le capteur est un capteur à membrane, un capteur à semi-conducteur ou à oxyde métallique, un spectromètre de masse, un capteur de CO₂, un capteur d'absorption infrarouge ou un capteur par spectroscopie d'émission.

5. Détecteur de fuite à vide selon l'une quelconque des revendications précédentes, **caractérisé en ce que** la pompe à vide est une pompe à spirales à étages multiples, une pompe à palette rotative, une pompe à lobes, une pompe à vis ou une pompe turbomoléculaire.

6. Procédé de fabrication d'un détecteur de fuite à vide spécifique au gaz selon l'une quelconque des revendications précédentes,
dans lequel le capteur de gaz spécifique au gaz (34) est intégré dans la pompe à vide à étages multiples (12) de telle manière que le capteur de gaz (34) fait partie intégrante de la pompe à vide (12) et est ainsi réalisé pour détecter un gaz spécifique à l'intérieur de la pompe à vide (12).
